# FASCICULE DE BREVET EUROPEEN

(11) **EP 3 551 471 B1**
(45) Date de publication et mention de la délivrance du brevet: **02.12.2020**
(21) Numéro de dépôt: 17821693.3
(22) Date de dépôt: 07.12.2017
(51) Int. Cl.: B60C 1/00, C08F 210/02, C08F 4/52, C08F 236/10

(54) **TERPOLYMERES D'ETHYLENE, DE 1,3-BUTADIENE OU D'ISOPRENE, ET D'UNE ALPHA-MONOOLEFINE AROMATIQUE**
TERPOLYMERE VON ETHYLEN, 1,3-BUTADIEN ODER ISOPREN UND EINEM AROMATISCHEN ALPHA-MONOOLEFIN
TERPOLYMERS OF ETHYLENE, 1,3-BUTADIENE OR ISOPRENE, AND OF AN AROMATIC ALPHA-MONOOLEFIN

(30) Priorité: 09.12.2016 FR 1662195
(43) Date de publication de la demande: 16.10.2019
(73) Titulaire: Compagnie Générale des Etablissements Michelin, 63000 Clermont-Ferrand (FR)
(72) Inventeur: LAFAQUIERE, Vincent, 63040 Clermont-Ferrand Cedex 9 (FR); THUILLIEZ, Julien, 63040 Clermont-Ferrand Cedex 9 (FR); MORESO, Emma, 63040 Clermont-Ferrand Cedex 9 (FR)
(74) Mandataire: Gandon-Pain, Sylvie
(86) Numéro de dépôt international: PCT/FR2017/053431
(87) Numéro de publication internationale: WO 2018/104669

(56) Documents cités:
- EP-A1- 1 777 240
- FR-A1- 2 858 817
- FR-A1- 2 893 030
- DATABASE WPI Week 201162 Thomson Scientific, London, GB; AN 2011-L74669 XP002772752, & WO 2011/111656 A1 (RIKEN KK) 15 septembre 2011 (2011-09-15)
- CHRISTOPHE BOISSON ET AL: "Advances and Limits in Copolymerization of Olefins with Conjugated Dienes", MACROMOLECULAR SYMPOSIA., vol. 226, no. 1, 1 mai 2005 (2005-05-01), pages 17-24, XP055280170, DE ISSN: 1022-1360, DOI: 10.1002/masy.200550802

## Description

Le domaine de la présente invention est celui des polymères qui sont des terpolymères d'éthylène, de 1,3-butadiène ou d'isoprène, et d'une α-monooléfine aromatique.

Les polymères traditionnellement utilisés dans les compositions de caoutchouc pour pneumatique sont des élastomères, homopolymères ou copolymères de 1,3-butadiène ou d'isoprène, tels que les polybutadiènes (BR), les polyisoprènes synthétiques (IR), le caoutchouc naturel (NR), les copolymères de 1,3-butadiène et de styrène (SBR). Le point commun à ces polymères est la forte proportion molaire d'unités 1,3-diène dans le polymère, généralement très supérieure à 50%, ce qui peut les rendre sensibles à l'oxydation, notamment sous l'action de l'ozone. Ils sont ci-après dénommés polymères riches en unités 1,3-diène.

Il est connu d'utiliser dans des compositions de caoutchouc pour pneumatique des copolymères présentant une sensibilité moindre à l'oxydation. On peut citer par exemple les caoutchoucs butyls, les terpolymères EPDM, les copolymères d'éthylène et de 1,3-butadiène qui contiennent tous plus de 50% en mole d'une α-monooléfine ou d'éthylène. Les copolymères d'éthylène et de 1,3-butadiène, lorsqu'ils sont utilisés dans une composition de caoutchouc pour pneumatique à la place des polymères riches en unités 1,3-diène, sont aussi connus pour modifier le compromis de performance entre la résistance à l'usure et la résistance au roulement du pneumatique. La synthèse de ces copolymères et leur utilisation dans une composition de caoutchouc pour pneumatique sont par exemple décrits dans les documents EP 1 092 731, WO 200754224, WO 2007054223 et WO 2014114607.

On peut avoir intérêt à disposer de copolymères d'éthylène et de 1,3-diène encore plus riches en éthylène par exemple pour augmenter davantage la résistance du copolymère à l'oxydation ou pour diminuer le coût de fabrication du copolymère. Les copolymères d'éthylène et de 1,3-diène dans lesquels le rapport molaire entre le taux des unités éthylène et la somme des taux des unités éthylène et des unités 1,3-diène est supérieur à 0,7 peuvent être considérés comme des polymères diéniques riches en unités éthylène. Or il se trouve que les copolymères d'éthylène et de 1,3-diène peuvent être cristallins lorsque la proportion d'éthylène dans le copolymère devient très importante, par exemple supérieure à 70% en mole. La fusion des parties cristallines du copolymère entraînant une baisse de sa rigidité, une composition de caoutchouc contenant un tel copolymère et utilisée dans un pneumatique voit aussi sa rigidité diminuer lorsqu'elle est portée à des températures égalant ou dépassant la température de fusion des parties cristallines, ce qui peut être le cas pendant les phases répétées de freinage et d'accélération du pneumatique. Cette dépendance de la rigidité en fonction de la température peut donc entraîner des fluctuations non maîtrisées des performances du pneumatique. Il est d'intérêt de disposer de polymères diéniques riches en unités éthylène dont la cristallinité est réduite, voire supprimée.

Les Demanderesses ont découvert un nouveau polymère diénique riche en unités éthylène dont la cristallinité est réduite, voire supprimée.

Ainsi, un premier objet de l'invention est un terpolymère d'éthylène, de 1,3-diène et d'une α-monooléfine aromatique dans lequel le rapport molaire entre le taux des unités éthylène et la somme des taux des unités éthylène et des unités 1,3-diène est supérieur à 0,7, lequel terpolymère contient plus de 50% à 80% en mole d'unités éthylène, de 10% à moins de 40% en mole d'unités α-monooléfine aromatique, le 1,3-diène étant le 1,3-butadiène ou l'isoprène. En particulier, le terpolymère est un élastomère.

L'invention porte aussi sur un procédé de préparation du terpolymère conforme à l'invention.

Un autre objet de l'invention est une composition de caoutchouc à base de l'élastomère conforme à l'invention, d'une charge renforçante et d'un système de réticulation.

L'invention a aussi pour objet un article semi-fini qui comprend la composition de caoutchouc conforme à l'invention.

L'invention a également pour objet un pneumatique comportant la composition de caoutchouc conforme à l'invention ou l'article semi-fini conforme à l'invention.

### 1. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

L'expression « unité éthylène » fait référence au motif -(CH₂-CH₂)- résultant de l'insertion de l'éthylène dans le terpolymère. L'expression « unité 1,3-diène » fait référence aux unités résultant de l'insertion du 1,3-diène par une addition 1,4, une addition 1,2 ou une addition 3,4 dans le cas de l'isoprène. L'expression « unité α-monooléfine aromatique » fait référence au motif -(CH₂-CHAr)- résultant de l'insertion de l'a-monooléfine aromatique dans le terpolymère.

Sauf indication contraire, les taux des unités résultant de l'insertion d'un monomère dans le terpolymère sont exprimés en pourcentage molaire par rapport à la totalité des unités monomères du terpolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le terpolymère conforme à l'invention a pour caractéristique essentielle d'être un terpolymère d'éthylène, de 1,3-diène et d'une α-monooléfine aromatique, le 1,3-diène étant le 1,3-butadiène ou l'isoprène.

Il a aussi pour autre caractéristique de contenir plus de 50% à 80% en mole d'unité éthylène. Les taux respectifs des unités éthylène et des unités 1,3-diène dans le terpolymère sont telles que le rapport molaire entre le taux des unités éthylène dans le terpolymère et la somme des taux des unités éthylène et des unités 1,3-diène dans le terpolymère est supérieur à 0,7. En raison de ces taux respectifs, le terpolymère conforme à l'invention est considéré comme un polymère diénique riche en unités éthylène. De manière préférentielle, ce rapport molaire est supérieur ou égal à 0,8. De manière plus préférentielle, ce rapport molaire est aussi inférieur ou égal à 0,95. De manière encore plus préférentielle, il est inférieur à 0,95.

Le terpolymère conforme à l'invention a aussi pour autre caractéristique de contenir de 10% à moins de 40% en mole d'unités α-monooléfine aromatique. Ainsi, des taux de cristallinité inférieurs à 10%, de préférence inférieurs à 5%, voire nuls, peuvent être obtenus. Par ailleurs, la possibilité d'introduire de 10% jusqu'à moins de 40% en mole d'unité α-monooléfine aromatique dans le polymère donne accès à des terpolymères qui peuvent se différencier les uns des autres par leur température de transition vitreuse sur une large gamme de température, de l'ordre d'une cinquantaine de degrés. Enfin, cette forte variation possible de taux d'unités α-monooléfine aromatique dans le terpolymère donne accès à des terpolymères qui peuvent se différencier aussi par leur module au plateau caoutchoutique qui peut varier du simple au double. Les caractéristiques de cristallinité, de température de transition vitreuse et de rigidité des terpolymères conformes à l'invention sont attribuables à la microstructure des terpolymères, notamment au taux relatif des monomères dans le terpolymère et à la répartition statistique des unités α-monooléfine aromatique dans le terpolymère. Selon l'un quelconque des modes de réalisation de l'invention, le terpolymère est de préférence un terpolymère statistique. De préférence, le taux d'unités α-monooléfine aromatique est d'au moins 15% en mole des unités monomères du terpolymère. De manière plus préférentielle, le taux d'unités monooléfine aromatique est d'au plus 35% en mole des unités monomères du terpolymère. Les terpolymères conformes à ce mode de réalisation plus préférentiel de l'invention présentent typiquement une température de transition vitreuse inférieure à 0°C, ce qui est particulièrement adapté pour une utilisation dans un semi-fini pour pneumatique.

Par alpha oléfine (a-oléfine), on entend une oléfine terminale, c'est-à-dire qu'elle contient le groupe vinylique de formule -CH=CH₂. Par monooléfine, on entend un monomère qui contient une seule double liaison carbone carbone hormis celles du noyau benzénique du groupe aromatique. Typiquement, l'a-monooléfine aromatique est de formule CH₂=CH-Ar, dans lequel le symbole Ar représente un groupe aromatique. Le groupe aromatique peut être un phényle, substitué ou non. A titre d'a-monooléfine aromatique conviennent le styrène, les styrènes substitués par un ou plusieurs groupes alkyles en para, méta ou ortho ou leurs mélanges. De préférence, l'a-monooléfine aromatique est le styrène.

Selon un mode de réalisation de l'invention, le taux d'unité éthylène dans le terpolymère est compris dans un domaine allant de 60% à 80% en mole des unités monomères du terpolymère.

Selon un autre mode de réalisation de l'invention, le taux des unités 1,3-diène dans le terpolymère est supérieur à 3% en mole des unités monomères du terpolymère. Lorsque le terpolymère est mis en présence d'un agent de réticulation, notamment de vulcanisation, dans une composition de caoutchouc, un taux d'unités 1,3-diène supérieur à 3% permet l'obtention au sein de la composition de caoutchouc d'un polymère réticulé particulièrement adapté pour une utilisation dans un article semi-fini pour pneumatique.

Le taux d'unités 1,3-diène dans le terpolymère est de préférence inférieur à 30% en mole des unités monomères du terpolymère, de manière plus préférentielle inférieur à 25% en mole des unités monomères du terpolymère, ce qui permet d'augmenter la résistance à l'oxydation du terpolymère.

Selon un mode de réalisation, le 1,3-diène est de préférence le 1,3-butadiène.

Selon un mode de réalisation particulièrement préférentiel de l'invention, le terpolymère conforme à l'invention est un terpolymère dans lequel le taux d'unités éthylène varie de 60 à 75% en mole des unités monomères du terpolymère, le taux d'unités 1,3-diène de 5 à 15% en mole des unités monomères du terpolymère, le taux d'unités α-monooléfine aromatique de 15 à 35% en mole des unités monomères du terpolymère et le rapport molaire entre le taux des unités éthylène et la somme des taux des unités éthylène et des unités 1,3-diène varie de 0,8 à moins de 0,95. Le terpolymère selon ce mode de réalisation particulièrement préférentiel de l'invention présente les caractéristiques les plus appropriées pour une utilisation dans une composition de caoutchouc pour pneumatique. Un tel polymère présente un taux de cristallinité très faible, notamment inférieur à 5%, voire nul.

Selon l'un quelconque des modes de réalisation de l'invention, les unités 1,4-trans représentent préférentiellement plus de 60% en mole, plus préférentiellement plus de 80% en mole des unités 1,3-diène. De façon bien connue, les unités 1,4-trans résultent d'une addition 1,4 du 1,3-diène avec la configuration trans.

Selon l'un quelconque des modes de réalisation de l'invention, le terpolymère est de préférence un terpolymère d'éthylène, de 1,3-butadiène et d'une α-monooléfine aromatique, de manière plus préférentielle un terpolymère d'éthylène, de 1,3-butadiène et de styrène.

Le terpolymère conforme à l'invention peut être synthétisé par un procédé, autre objet de l'invention, qui comprend la polymérisation d'éthylène, du 1,3-diène et de l'a-monooléfine aromatique en présence d'un système catalytique à base d'un métallocène de terre rare et d'un composé organométallique à titre de co-catalyseur.

Le métallocène répond à la formule (I) :

{P(Cp)(Flu)NdG} (I)

dans laquelle :
- Nd désigne un atome de néodyme,
- G désigne un groupe comprenant le motif borohydrure BH₄ ou désigne un atome d'halogène X choisi dans le groupe constitué par le chlore, le fluor, le brome et l'iode,
- Cp désigne un groupe cyclopentadiényle de formule C₅H₄,
- Flu désigne un groupe fluorényle de formule C₁₃H₈,
- P est un groupe pontant les deux groupes Cp et Flu, et comprend un atome de silicium ou de carbone.

Selon un mode de réalisation préférentiel de l'invention, le symbole G désigne un atome de chlore ou le groupe de formule (II) :

(BH₄)_{(1+y)-}L_{y}-Nₓ (II)

dans laquelle
- L représente un métal alcalin choisi dans le groupe constitué par le lithium, le sodium et le potassium,
- N représente une molécule d'un éther,
- x, nombre entier ou non, est égal ou supérieur à 0,
- y, nombre entier, est égal ou supérieur à 0.

Comme éther convient tout éther qui a le pouvoir de complexer le métal alcalin, notamment le diéthyléther et le tétrahydrofuranne.

Le pont P reliant les groupes Cp et Flu répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z désigne avantageusement un atome de silicium, Si.

Selon un mode de réalisation particulièrement préférentiel, le métallocène est le borohydrure de diméthylsilyl cyclopentadiényle fluorényle de néodyme de formules (IIIa) ou (IIIb) :

[Me₂Si(Cp)(Flu)Nd(µ-BH₄)₂Li(THF)] (IIIa)

[Me₂Si(Cp)(Flu)Nd(µ-BH₄)(THF)] (IIIb)

dans laquelle Cp représente le groupe C₅H₄, Flu représente le groupe C₁₃H₈.

Le métallocène utilisé pour la préparation du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande WO 2007054224 A2. Le métallocène peut être préparé de façon traditionnelle par un procédé analogue à celui décrit dans les documents EP 1 092731 et WO 2007054223, notamment par réaction dans des conditions inertes et anhydres du sel d'un métal alcalin du ligand avec un sel de terre rare comme un halogénure ou un borohydrure de terre rare, dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Un autre constituant de base du système catalytique conforme à l'invention est le co-catalyseur capable d'activer le métallocène vis-à-vis de la polymérisation, notamment dans la réaction d'amorçage de polymérisation. Le co-catalyseur est de manière bien connu un composé organométallique. Peuvent convenir les composés organométalliques capables d'activer le métallocène, tels que les composés organomagnésiens, organoaluminiques et organolithiens.

Le co-catalyseur est préférentiellement un organomagnésien, c'est-à-dire un composé qui présente au moins une liaison C-Mg. A titre de composés organomagnésiens on peut citer les diorganomagnésiens, en particulier les dialkylmagnésiens, et les halogénures d'organomagnésien, en particulier les halogénures d'alkylmagnésien. Le composé diorganomagnésien présente deux liaisons C-Mg, en l'espèce C-Mg-C ; l'halogénure d'organomagnésien présente une liaison C-Mg. De manière plus préférentielle, le co-catalyseur est un diorganomagnésien.

A titre de co-catalyseur, également appelé agent d'alkylation, conviennent particulièrement les alkylmagnésiens (également appelés alkylmagnésium), tout particulièrement les dialkylmagnésiens (également appelés dialkylmagnésium) ou les halogénures d'alkylmagnésien (également appelés halogénures d'alkylmagnésium), comme par exemple le butyloctylmagnésium, le dibutylmagnésium, le butyléthylmagnésium et le chlorure de butylmagnésium. Le co-catalyseur est avantageusement le butyloctylmagnésium.

Le taux de co-catalyseur utilisé est généralement indexé sur le taux de métal apporté par le métallocène ; un rapport molaire (co-catalyseur / métal du métallocène) allant de préférence de 1 à 100 peut être utilisé, les valeurs les plus faibles étant plus favorables pour l'obtention de polymères de masses molaires élevées.

Le système catalytique peut être préparé de façon traditionnelle par un procédé analogue à celui décrit dans les documents EP 1 092731 et WO 2007054223. Par exemple on fait réagir dans un solvant hydrocarboné le co-catalyseur et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du terpolymère conforme à l'invention.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La polymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

De manière préférentielle, le terpolymère est un élastomère.

L'élastomère conforme à l'invention peut être utilisé dans une composition de caoutchouc.

La composition de caoutchouc a donc pour caractéristique essentielle d'être à base de l'élastomère conforme à l'invention, d'une charge renforçante et d'un système de réticulation.

La charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. La charge renforçante peut être utilisée à un taux compris entre 30 et 200 parties en poids pour cent parties de la matrice élastomère (pce). Par matrice élastomère, on entend dans la présente invention l'ensemble des élastomères présents dans la composition de caoutchouc, qu'ils soient conformes ou non à l'invention.

La composition de caoutchouc peut effectivement contenir un élastomère autre que celui conforme à l'invention, notamment un élastomère traditionnellement utilisé dans les compositions de caoutchouc comme les polymères riches en unités 1,3-diène, en particulier les homopolymères ou copolymères de 1,3-butadiène ou d'isoprène.

Le système de réticulation peut être à base de soufre, de donneurs de soufre, de peroxydes, de bismaléimides ou de leurs mélanges. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

Tous les réactifs sont obtenus commercialement excepté le métallocène [{Me₂SiCpFluNd(µ-BH₄)₂Li(THF)}] qui est préparé selon le mode opératoire décrit dans le document WO 2007054223.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le 1,3-butadiène et le styrène sont purifiés par passage sur gardes d'alumine.

### 1) Détermination de la microstructure des polymères :

La détermination de la microstructure du polymère est réalisée par une analyse RMN. Les spectres sont acquis sur un spectromètre Avancelll HD 500 MHz BRUKER équipé d'une cryosonde " large bande " BBIz-grad 5 mm. L'expérience RMN 1H quantitative, utilise une séquence simple impulsion 30° et un délai de répétition de 5 secondes entre chaque acquisition. 64 à 256 accumulations sont réalisées. Les expériences bidimensionnelles 1H/13C sont utilisées dans le but de déterminer la structure des unités des polymères. Les échantillons sont solubilisés dans le chloroforme deutéré à environ 20mg/mL.
Le spectre RMN 1H permet de quantifier les unités styrène, 1,3-butadiène et éthylène. Le spectre de corrélation RMN 2D ¹H/¹³C ¹J HSQC édité permet de vérifier la nature des motifs grâce aux déplacements chimiques des signaux des atomes de carbone et de proton. Des spectres de corrélation longue distance ³J HMBC ¹H/¹³C permettent de vérifier la présence de liaisons covalentes entre les unités styrène, 1,3-butadiène et l'éthylène.
L'attribution des protons utilisés pour la quantification est reportée dans le tableau 1 :

**Tableau 1 : Déplacements chimiques observés pour la quantification des échantillons Les déplacements chimiques sont calibrés par rapport à l'impureté protonée du chloroforme (δppm 1H à 7,20ppm et δppm 13C à 77,0ppm).**

| **Nombre de proton** | **δppm (¹H)** | **Unités quantifiés** |
|---|---|---|
| 5 | 6.5 à 8 | 5 H aromatiques de l'unité styrène |
| 1+2 | 4.96 à 5.60 | 1H éthylénique du PB1-2 + 2H éthyléniques du PB1-4 |
| 2 | 4.6 à 4.96 | 2H éthyléniques du PB1-2 |
| 4 | 0.2 - 3.0 | 4H de l'unité éthylène + 3H aliphatiques de l'unité styrène + 3H du PB1-2 + 4H du PB1-4 |

| | | |
|---|---|---|
| PB1-2 : unité du 1,3 butadiène résultant d'une addition 1,2 (unité 1,2) PB1-4 : unité du 1,3 butadiène résultant d'une addition 1,4 (unité 1,4) | | |

L'information de la microstructure en cis et trans des motifs PB1-4 peut être obtenue à partir du spectre RMN 1D 13C quantitatif.

### 2) Détermination du taux de cristallinité des polymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999)

### 3) Détermination de la rigidité des polymères :

Les mesures sont réalisées sur un rhéomètre Anton Paar modèle MCR301 en mode Cisaillement avec des éprouvettes cylindriques de géométrie maitrisée (épaisseur comprise entre 1,5mm et 3mm et diamètre compris entre 22mm et 28mm). L'échantillon est soumis à une sollicitation sinusoïdale en cisaillement, à une température fixe (correspondant à la fin du passage de la transition vitreuse de l'élastomère sur un balayage en température à 10Hz), et sur une plage fréquentielle allant de 0.01Hz à 100Hz. La valeur de rigidité retenue comme étant la rigidité du plateau caoutchoutique de l'échantillon est la valeur du module de cisaillement G' pour la fréquence à laquelle le module de perte G" atteint son minimum, conformément à la méthode décrite par C. Liu, J. He, E. van Ruymbeke, R. Keunings, C. Bailly, Evaluation of different methods for the determination of the plateau modulus and the entanglement molecular weight, Polymer 47(2006)4461-4479.

### 4) Détermination de la température de transition vitreuse des polymères :

La température de transition vitreuse est mesurée au moyen d'un calorimètre différentiel ("Differential Scanning Calorimeter") selon la norme ASTM D3418 (1999).

### 5) Synthèse des polymères :

Les polymères sont synthétisés selon le mode opératoire suivant :
Dans un réacteur en verre de 500 ml contenant 300 ml de toluène, on ajoute le co-catalyseur, le butyloctylmagnésium (BOMAG) puis le métallocène [Me₂SiCpFluNd(µ-BH₄)₂Li(THF)]. La durée d'alkylation est de 10 minutes, la température de réaction est de 20 °C. Les quantités respectives des constituants du système catalytique figurent dans le tableau 2.
Ensuite, les monomères sont ajoutés selon les quantités respectives indiquées dans le tableau 2, l'éthylène (Eth) et le 1,3-butadiène (Bde) étant sous la forme d'un mélange gazeux. La polymérisation est conduite à 80°C et à une pression initiale de 4 bars. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

Pour les exemples 1 à 5, le styrène est ajouté en premier dans le réacteur avant le mélange gazeux d'éthylène et de 1,3-butadiène.

Les caractéristiques du polymère figurent dans le tableau 3.

Les exemples 1 à 4 sont des exemples conformes à l'invention. Les exemples 5 et 6 ne sont pas conformes à l'invention en raison du taux de styrène, respectivement de 8,6% et de 0%.

Il est à noter que la cristallinité est fortement réduite pour les polymères des exemples 1 à 4, voire supprimée pour les exemples 1, 2 et 4, comparativement aux polymères des exemples 5 et 6.

Le polymère diénique de l'exemple 6 (exemple non conforme à l'invention) est un polymère diénique riche en unités éthylène, puisque le rapport molaire entre le taux des unités éthylène et la somme des taux des unités éthylène et des unités 1,3-butadiène, noté E/E+B, est de 0,74. On constate qu'il est fortement cristallin : son taux de cristallinité est de 31,1%. Les polymères des exemples 1 à 4 (conformes à l'invention) présentent une cristallinité bien inférieure à celle du polymère de l'exemple 6, bien que le rapport molaire E/E+B soit bien supérieur à celui du polymère de l'exemple 6.

Le polymère diénique de l'exemple 5 (exemple non conforme à l'invention) est aussi un polymère diénique riche en éthylène, mais qui présente une cristallinité encore trop importante (taux de cristallinité supérieure à 10%).

Par ailleurs, on note que selon l'invention, il est possible d'accéder à des polymères de température de transition vitreuse très différente. On note que les températures de transition vitreuse des polymères des exemples 1 à 4 s'échelonnent de -33°C à 8°C. Cette forte variation de température de transition vitreuse est aussi observée, même dans le cas où les polymères présentent sensiblement le même rapport molaire E/E+B. Par exemple, les polymères des exemples 1, 2 et 3 présentent un rapport molaire aux alentours de 0,9 alors que la Tg du polymère de l'exemple 1 est de 8°C, celle du polymère de l'exemple 2 de -4°C et celle du polymère de l'exemple 3 de -22°C.

On note également que des polymères avec des rigidités qui varient du simple au double peuvent être aussi obtenus, comme le montrent les exemples 2 et 4.

Les caractéristiques de cristallinité, de température de transition vitreuse et de rigidité des terpolymères des exemples 1 à 4 résultent vraisemblablement de la microstructure des terpolymères, notamment du taux relatif d'unité éthylène, du taux de styrène et de la répartition statistique du styrène.

Les polymères des exemples 1 à 4 sont tout à fait adaptés pour une utilisation dans une composition de caoutchouc, en particulier ceux des exemples 2 à 4 en raison de la valeur de leur température de transition vitreuse inférieure à 0°C.

Enfin, les polymères des exemples 2 à 4 présentent les caractéristiques les plus appropriées pour pouvoir être utilisés dans une composition de caoutchouc pour pneumatique, puisqu'ils allient à la fois une très faible cristallinité, voire nulle et une température de transition vitreuse inférieure à 0°C.

**Tableau 2**

| **Exemple** | **Concentration métallocène (mmol/L)** | **Concentration agent alkylant (mmol/L)** | **Quantité de styrène (mL)** | **Composition mélange gazeux (%mol Eth/Bde)** | **Activité (kg/mol.h)** | **Masse polymère formée (g)** |
|---|---|---|---|---|---|---|
| 1 | 0,32 | 0,95 | 33 | 90/10 | 145 | 33,7 |
| 2 | 0,31 | 0,92 | 20 | 90/10 | 104 | 26,1 |
| 3 | 0,30 | 0,65 | 10 | 95/5 | 103 | 19,5 |
| 4 | 0,35 | 0,77 | 10 | 85/15 | 74 | 14,07 |
| 5 | 0,30 | 0,66 | 4 | 85/15 | 129 | 18,9 |
| 6 | 0,32 | 0,97 | 0 | 80/20 | 92 | 12,4 |

**Tableau 3**

| **Exemples** | **Ethylène (% mol)** | **Styrène (% mol)** | **E/E+B (1)** | **1,2 (2)** | **% 1,4-trans (3)** | **% 1,4-cis (4)** | **Tg (°C)** | **Cristallinité (%)** | **Rigidité MPa)** |
|---|---|---|---|---|---|---|---|---|---|
| 1 | 55 | 39,1 | 0,90 | 8 | 92- | < 1% | 8 | 0 | |
| 2 | 62,2 | 31,1 | 0,90 | 10 | 90- | < 1% | -4 | 0 | 0,63 |
| 3 | 75,3 | 20,3 | 0,95 | 15 | 85- | < 1% | -22 | 7 | |
| 4 | 70,4 | 17,8 | 0,86 | 12 | 88- | < 1% | -33 | 1 | 1,1 |
| 5 | 77,8 | 8,6 | 0,85 | 11 | 89- | < 1% | -49 | 12,2 | |
| 6 | 73,7 | - | 0,74 | 4 | 96- | < 1% | -54 | 31,1 | |

| | | | | | | | | | |
|---|---|---|---|---|---|---|---|---|---|
| (1) Rapport molaire entre le taux des unités éthylène et la somme des taux des unités éthylène et des unités 1,3-butadiène (2) Rapport molaire entre le taux des unités 1,2 et le taux des unités 1,3-butadiène (3) Rapport molaire entre le taux des unités 1,4 et le taux des unités 1,3-butadiène (4) Rapport molaire entre le taux des unités 1,4-cis et le taux des unités 1,3-butadiène : le taux d'unités 1,4-cis n'est pas quantifiable, les signaux sont négligeables et donc inférieurs à 1%. | | | | | | | | | |

## Revendications

1. Terpolymère d'éthylène, de 1,3-diène et d'une α-monooléfine aromatique dans lequel le rapport molaire entre le taux des unités éthylène et la somme des taux des unités éthylène et des unités 1,3-diène est supérieur à 0,7, lequel terpolymère contient plus de 50% à 80% en mole d'unités éthylène, de 10% à moins de 40% en mole d'unités α-monooléfine aromatique, le 1,3-diène étant le 1,3-butadiène ou l'isoprène, lequel terpolymère est préférentiellement un élastomère.

2. Terpolymère selon la revendication 1, dans lequel le taux d'unités éthylène est compris dans un domaine allant de 60% à 80% en mole des unités monomères du terpolymère.

3. Terpolymère selon l'une quelconque des revendications 1 à 2 dans lequel le taux des unités 1,3-diène est supérieur à 3% en mole des unités monomères du terpolymère.

4. Terpolymère selon l'une quelconque des revendications 1 à 3 dans lequel le taux des unités 1,3-diène est inférieur à 30% en mole des unités monomères du terpolymère, préférentiellement inférieur à 25% en mole des unités monomères du terpolymère.

5. Terpolymère selon l'une quelconque des revendications 1 à 4 dans lequel plus de 60% en moles des unités 1,3-diène sont des unités 1,4-trans, de préférence plus de 80% en moles des unités 1,3-diène sont des unités 1,4-trans.

6. Terpolymère selon l'une quelconque des revendications 1 à 5 dans lequel le taux des unités α-monooléfine aromatique est d'au moins 15% en mole des unités monomères du terpolymère.

7. Terpolymère selon l'une quelconque des revendications 1 à 6 dans lequel le taux des unités α-monooléfine aromatique est au plus de 35% en mole des unités monomères du terpolymère.

8. Terpolymère selon l'une quelconque des revendications 1 à 7 dans lequel le rapport molaire entre les unités éthylène et la somme des unités éthylène et des unités 1,3-diène est supérieur ou égal à 0,8.

9. Terpolymère selon l'une quelconque des revendications 1 à 8 dans lequel le rapport molaire entre les unités éthylène et la somme des unités éthylène et des unités 1,3-diène est inférieur ou égal à 0,95, de préférence inférieur à 0,95.

10. Terpolymère selon l'une quelconque des revendications 1 à 9 dans lequel l'a-monooléfine aromatique est le styrène, un styrène substitué par un ou plusieurs groupes alkyles en para, méta ou ortho ou leurs mélanges.

11. Terpolymère selon l'une quelconque des revendications 1 à 10 dans lequel l'a-monooléfine aromatique est le styrène.

12. Terpolymère selon l'une quelconque des revendications 1 à 11, dans lequel le 1,3-diène est le 1,3-butadiène.

13. Procédé de synthèse d'un terpolymère défini à l'une quelconque des revendications 1 à 12 qui comprend la polymérisation d'éthylène, de 1,3-diène et d'une α-monooléfine aromatique en présence d'un système catalytique à base d'un métallocène de terre rare de formule (I) et d'un composé organométallique à titre de co-catalyseur,
{P(Cp)(Flu)NdG} (I)
- Nd désignant un atome de néodyme,
- G désignant un groupe comprenant le motif borohydrure BH₄ ou désignant un atome d'halogène X choisi dans le groupe constitué par le chlore, le fluor, le brome et l'iode,
- Cp désignant un groupe cyclopentadiényle de formule C₅H₄,
- Flu désignant un groupe fluorényle de formule C₁₃H₈,
- P étant un groupe pontant les deux groupes Cp et Flu, et comprenant un atome de silicium ou de carbone.

14. Composition de caoutchouc à base d'une charge renforçante, d'un système de réticulation et d'un terpolymère défini à l'une quelconque des revendications 1 à 12, lequel terpolymère est un élastomère.

15. Pneumatique qui comprend une composition définie à la revendication 14.

## Patentansprüche

1. Terpolymer von Ethylen, 1,3-Dien und einem aromatischen α-Monoolefin, wobei das Molverhältnis zwischen dem Gehalt an Ethylen-Einheiten und der Summe der Gehalte an Ethylen-Einheiten und 1,3-Dien-Einheiten größer als 0,7 ist, wobei das Terpolymer mehr als 50 bis 80 Mol-% Ethylen-Einheiten und 10 bis weniger als 40 Mol-% Einheiten von aromatischem α-Monoolefin enthält, wobei es sich bei dem 1,3-Dien um 1,3-Butadien oder Isopren handelt, wobei es sich bei dem Terpolymer vorzugsweise um ein Elastomer handelt.

2. Terpolymer nach Anspruch 1, wobei der Gehalt an Ethylen-Einheiten in einem Bereich von 60 bis 80 Mol-% der Monomereinheiten des Terpolymers liegt.

3. Terpolymer nach einem der Ansprüche 1 bis 2, wobei der Gehalt an 1,3-Dien-Einheiten größer als 3 Mol-% der Monomereinheiten des Terpolymers ist.

4. Terpolymer nach einem der Ansprüche 1 bis 3, wobei der Gehalt an 1,3-Dien-Einheiten kleiner als 30 Mol-% der Monomereinheiten des Terpolymers, vorzugsweise kleiner als 25 Mol-% der Monomereinheiten des Terpolymers, ist.

5. Terpolymer nach einem der Ansprüche 1 bis 4, wobei mehr als 60 Mol-% der 1,3-Dien-Einheiten trans-1,4-Einheiten sind und vorzugsweise mehr als 80 Mol-% der 1,3-Dien-Einheiten trans-1,4-Einheiten sind.

6. Terpolymer nach einem der Ansprüche 1 bis 5, wobei der Gehalt an Einheiten von aromatischem α-Monoolefin mindestens 15 Mol-% der Monomereinheiten des Terpolymers beträgt.

7. Terpolymer nach einem der Ansprüche 1 bis 6, wobei der Gehalt an Einheiten von aromatischem α-Monoolefin höchstens 35 Mol-% der Monomereinheiten des Terpolymers beträgt.

8. Terpolymer nach einem der Ansprüche 1 bis 7, wobei das Molverhältnis zwischen den Ethylen-Einheiten und der Summe der Ethylen-Einheiten und der 1,3-Dien-Einheiten größer oder gleich 0,8 ist.

9. Prepolymer nach einem der Ansprüche 1 bis 8, wobei das Molverhältnis zwischen den Ethylen-Einheiten und der Summe der Ethylen-Einheiten und der 1,3-Dien-Einheiten kleiner oder gleich 0,95, vorzugsweise kleiner als 0,95, ist.

10. Terpolymer nach einem der Ansprüche 1 bis 9, wobei es sich bei dem aromatischen α-Monoolefin um Styrol, ein durch eine oder mehrere Alkylgruppen para-, meta- oder ortho-substituiertes Styrol oder Mischungen davon handelt.

11. Terpolymer nach einem der Ansprüche 1 bis 10, wobei es sich bei dem aromatischen α-Monoolefin um Styrol handelt.

12. Terpolymer nach einem der Ansprüche 1 bis 11, wobei es sich bei dem 1,3-Dien um 1,3-Butadien handelt.

13. Verfahren zur Synthese eines Terpolymers gemäß einem der Ansprüche 1 bis 12, das die Polymerisation von Ethylen, 1,3-Dien und einem aromatischen α-Monoolefin in Gegenwart eines katalytischen Systems auf Basis eines Seltenerdmetallmetallocens der Formel (I) und einer metallorganischen Verbindung als Cokatalysator umfasst,
{P(Cp)(Flu)NdG} (I)
- wobei Nd für ein Neodymatom steht,
- wobei G für eine Gruppe, die die Borhydrid-Einheit BH₄ umfasst, oder ein Halogenatom X aus der Gruppe bestehend aus Chlor, Fluor, Brom und Iod steht,
- wobei Cp für eine Cyclopentadienylgruppe der Formel C₅H₄ steht,
- wobei Flu für eine Fluorenylgruppe der Formel C₁₃H₈ steht,
- wobei P eine die beiden Gruppen Cp und Flu verbrückende Gruppe ist und ein Silicium- oder Kohlenstoffatom umfasst.

14. Kautschukzusammensetzungen auf Basis eines verstärkenden Füllstoffs, eines Vernetzungssystems und eines Terpolymers gemäß einem der Ansprüche 1 bis 12, wobei es sich bei dem Terpolymer um ein Elastomer handelt.

15. Reifen, der eine Zusammensetzung gemäß Anspruch 14 umfasst.

## Claims

1. Terpolymer of ethylene, of 1,3-diene and of an aromatic α-monoolefin in which the molar ratio of the contents of the ethylene units to the sum of the contents of the ethylene units and of the 1,3-diene units is greater than 0.7, which terpolymer contains more than 50 mol% to 80 mol% of ethylene units and from 10 mol% to less than 40 mol% of aromatic α-monoolefin units, the 1,3-diene being 1,3-butadiene or isoprene, which terpolymer is preferably an elastomer.

2. Terpolymer according to Claim 1, in which the content of ethylene units is within a range extending from 60 mol% to 80 mol% of the monomer units of the terpolymer.

3. Terpolymer according to either one of Claims 1 and 2, in which the content of the 1,3-diene units is greater than 3 mol% of the monomer units of the terpolymer.

4. Terpolymer according to any one of Claims 1 to 3, in which the content of the 1,3-diene units is less than 30 mol% of the monomer units of the terpolymer, preferably is less than 25 mol% of the monomer units of the terpolymer.

5. Terpolymer according to any one of Claims 1 to 4, in which more than 60 mol% of the 1,3-diene units are trans-1,4- units, preferably more than 80 mol% of the 1,3-diene units are trans-1,4- units.

6. Terpolymer according to any one of Claims 1 to 5, in which the content of the aromatic α-monoolefin units is at least 15 mol% of the monomer units of the terpolymer.

7. Terpolymer according to any one of Claims 1 to 6, in which the content of the aromatic α-monoolefin units is at most 35 mol% of the monomer units of the terpolymer.

8. Terpolymer according to any one of Claims 1 to 7, in which the molar ratio of the ethylene units to the sum of the ethylene units and of the 1,3-diene units is greater than or equal to 0.8.

9. Terpolymer according to any one of Claims 1 to 8, in which the molar ratio of the ethylene units to the sum of the ethylene units and of the 1,3-diene units is less than or equal to 0.95, preferably less than 0.95.

10. Terpolymer according to any one of Claims 1 to 9, in which the aromatic α-monoolefin is styrene, a styrene substituted by one or more alkyl groups in the para, meta or ortho positions, or their mixtures.

11. Terpolymer according to any one of Claims 1 to 10, in which the aromatic α-monoolefin is styrene.

12. Terpolymer according to any one of Claims 1 to 11, in which the 1,3-diene is 1,3-butadiene.

13. Process for the synthesis of a terpolymer defined in any one of Claims 1 to 12, which comprises the polymerization of ethylene, of 1,3-diene and of an aromatic α-monoolefin in the presence of a catalytic system based on a rare earth metal metallocene of formula (I) and on an organometallic compound as cocatalyst,
{P(Cp)(Flu)NdG} (I)
- Nd denoting a neodymium atom,
- G denoting a group comprising the borohydride BH₄ unit or denoting a halogen atom X selected from the group consisting of chlorine, fluorine, bromine and iodine,
- Cp denoting a cyclopentadienyl group of formula C₅H₄,
- Flu denoting a fluorenyl group of formula C₁₃H₈,
- P being a group bridging the two Cp and Flu groups and comprising a silicon or carbon atom.

14. Rubber composition based on a reinforcing filler, on a crosslinking system and on a terpolymer defined in any one of Claims 1 to 12, which terpolymer is an elastomer.

15. Tyre which comprises a composition defined in Claim 14.
